Europäisches Patentamt

European Patent Office

Office européen des brevets

(11) Publication number: **0 245 268**
**B1**

## (12) EUROPEAN PATENT SPECIFICATION

(45) Date of publication of patent specification: **22.11.90**

(21) Application number: **86900775.7**

(22) Date of filing: **09.01.86**

(86) International application number:
**PCT/FI86/00002**

(87) International publication number:
**WO 86/03986 17.07.86 Gazette 86/17**

(51) Int. Cl.⁵: **B 01 D 45/12, B 04 C 9/00,
F 27 B 15/12**

(54) METHOD AND APPARATUS FOR SEPARATING SOLID PARTICLES FROM FLUE GASES IN A CIRCULATING FLUIDIZED BED REACTOR.

(30) Priority: **11.01.85 FI 850134**

(43) Date of publication of application:
**19.11.87 Bulletin 87/47**

(45) Publication of the grant of the patent:
**22.11.90 Bulletin 90/47**

(84) Designated Contracting States:
**AT DE FR GB SE**

(56) References cited:
**DE-A-1 010 687
DE-A-3 124 832
FR-A-1 368 964
US-A-2 788 087
US-A-3 265 775
US-A-3 545 735**

**The file contains technical information
submitted after the application was filed and
not included in this specification**

(73) Proprietor: **A. Ahlström Corporation
SF-29600 Noormarkku (FI)**

(72) Inventor: **ENGSTRÖM, Folke
Kaunismäenkatu 5
SF-48600 Karhula (FI)**

(74) Representative: **Gilmour, David Cedric Franklyn
et al
POTTS, KERR & CO. 15 Hamilton Square
Birkenhead Merseyside L41 6BR (GB)**

Courier Press, Leamington Spa, England.

## Description

Method and apparatus for separating solid particles from flue gases in a circulating fluidized bed reactor.

The present invention relates to a method and an apparatus for separating solid particulates from flue gases in a circulating fluidized bed reactor, in which method the flue gases are led to a cyclone separator in which the separated solid particles are discharged and returned to the reactor.

The object of the invention is to accomplish a device by means of which solid particles can effectively be separated from the flue gases in a circulating fluidized bed reactor.

The circulating fluidized bed technique has long been applied e.g. in calcinators and is nowadays applied to a growing extent in various reactors, such as combustion chambers and gasifiers. In known applications, the separation of solid particles from flue gases takes place in an ordinary, in its lower part funnel-shaped cyclone separator, in the cylindrical vortex chamber of which is disposed a gas outlet pipe that leads the gases upwards, and from which solid particles are returned to the reactor via a discharge pipe. Such applications are known from US-A- 3,265,775, US-A- 3,545,735 and DE-A- 3,124,832.

A strong underpressure and a high axial flow speed are, as known, formed in the center of a cyclone separator. Due to this an ordinary cyclone tends to suck from the discharge pipe. The resulting suction flow does usually not have a tangential speed and consequently all particles transported with it are led out via the central pipe of the cyclone.

The solid material discharged with gas from the separator is mainly fly ash containing particles smaller than 100 µm, which is later separated by means of electro- or tube filters. Fly ash contains considerable amounts of unburnt particles and lime that has not had time to react with $SO_2$ in the reactor.

The separation degree of a cyclone separator decreases with the growth of the size of the cyclone.

By means of the method according to the invention a considerable part of the flue gas particles smaller than 100 µm can be returned to the reactor.

The method according to the invention is characterized in that a portion of the solid particles is discharged together with flue gas from the cyclone separator by means of suction from a suction chamber at the bottom of the cyclone separator, separately from the remaining portion of solid particles, and returned separately into the reactor.

The apparatus according to the invention is characterized in that between the lower part of the cyclone separator and the return pipe is disposed a suction chamber connected via a second return pipe and a suction device to the reactor for discharge of a portion of solid particles and flue gas by means of suction from the cyclone to the combustion chamber of the reactor, separately from the remaining portion of solid particles.

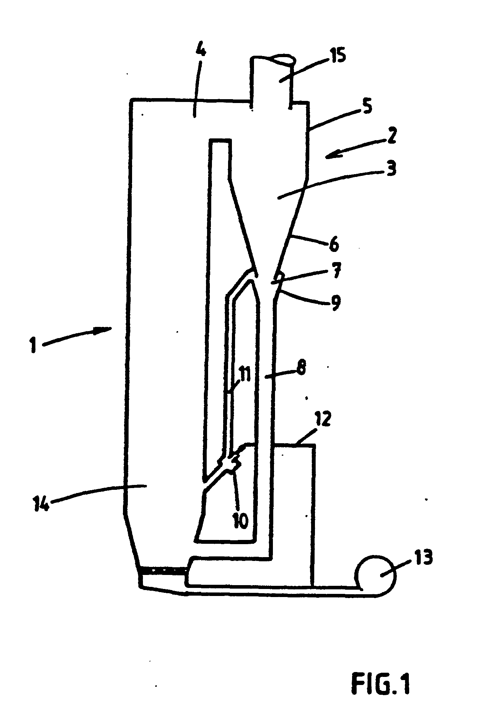

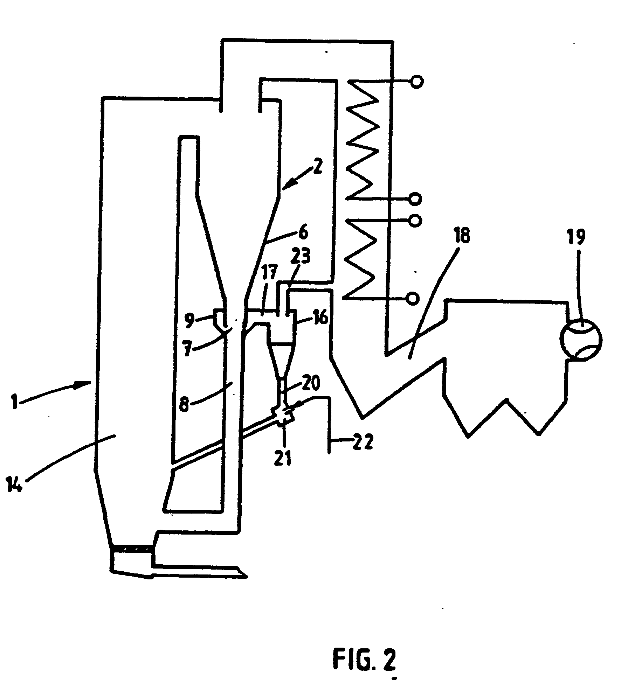

The invention is described in detail in the following with reference to the accompanying drawings, in which Fig. 1 shows a schematical vertical section of one embodiment of the method according to the invention and Fig. 2 shows another embodiment of the invention.

In Fig. 1 the reference number 1 refers to a vertical circulating fluidized bed reactor. Flue gases leaving the upper part of the reactor are led to a vortex chamber 3 disposed vertically in a cyclone separator 2 via an inlet duct 4 connected tangentially to the vortex chamber. The upper part 5 of the vortex chamber is cylindrical and the lower part 6 funnel-shaped. Solid particles concentrated on the periphery of the vortex chamber flow to a return pipe 8 via a discharge opening 7 in the lower part and is led back to the reactor. Between the discharge opening and the return duct is disposed a suction chamber 9 to which a pneumatic ejector 10 and a suction pipe 11 have been connected. Compressed air is supplied to the ejector via a pipe 12 from a fan 13. The outflow opening of the ejector is connected to a combustion chamber 14 of the reactor.

The ejector accomplishes in the discharge opening 7 of the cyclone separator an underpressure that causes suction which again causes a gas flow from the lower part of the separator to the suction chamber. With the gas is discharged fine particles concentrated in the lower part which are returned to the reactor via the ejector 10. By means of the compressed air that functions as an operating gas for the ejector and as a secondary gas for the reactor 1-30%, preferably ca. 10% of the flue gases from the combustion chamber are removed through the lower part of the separator and returned to the combustion chamber. The main part of the gases are discharged via a gas discharge pipe 15 in the upper part of the separator.

In the embodiment of the invention shown in fig. 2, the suction chamber 9 between a discharge opening 7 in the lower part 6 of the cyclone separator 2 and a return pipe 8 has been connected to an inlet duct 17 of another cyclone separator 16. A gas discharge pipe 23 in the upper part of the separator 16 is connected to a flue gas fan 19 via a flue gas duct 18. An ejector 21 into which compressed air is supplied via a pipe 22 is disposed in a discharge pipe 20 for solid particles that is connected to the lower part of the separator. The lower end of the discharge pipe is connected to a combustion chamber 14 of the reactor 1.

From the lower part of the cyclone separator 2 flue gas is sucked into a cyclone separator 16 by means of the flue gas fan 19. Fine dust particles transported with the flue gas are separated in the separator 16 and returned to the combustion chamber of the reactor by means of the ejector 21. Flue gas is led to the flue gas duct 18.

By means of the method and the apparatus according to the invention, not only coarse particles concentrated on the walls of the vortex chamber, but also a considerable part of the fine particles can be separated from the flue gases and returned to the reactor. Thus the separation degree of the separator improves and more such material is recuperated that has not had time to react when flowing through the combustion chamber.

The invention is not limited to the above embodiments but it can be modified and applied within the inventive concept defined by the claims.

## Claims

1. A method of separating solid particles from flue gases in a circulating fluidized bed reactor, in which method the flue gases from an upper part of the reactor are led to a cyclone separator from which solid particles are discharged and returned via a discharge opening and a return duct to the lower part of the reactor, characterized in that: a portion of the solid particles together with flue gas from the cyclone separator is discharged by means of suction from a suction chamber at the bottom of the cyclone separator, separately from the remaining portion of solid particles, and is returned separately into the reactor.

2. The method according to claim 1, characterized in that the suction is accomplished with a compressed air stream supplied into an ejector pump.

3. The method according to claim 1, characterized in that 1 — 30%, preferably about 10% of the flue gases are discharged from the cyclone separator with the solid particles discharged by means of suction.

4. The method according to claim 1 or 3, characterized in that gas is separated from the solid particles discharged by means of suction from the cyclone separator before the solid particles are returned to the reactor.

5. A circulating fluidized bed reactor (1) including an apparatus for separating solid particles from flue gases, which apparatus comprises a cyclone separator (2) connected via an inlet duct (4) to the upper part of the reactor, the funnel-shaped lower part (6) of the cyclone separator being connected by a return pipe (8) to the reactor for recycling of separated particles, characterized in that between the lower part (6) of the cyclone separator (2) and the return pipe (8) is disposed a suction chamber (9) connected via a second return pipe (11, 20) to a suction device (10, 21) and to the reactor for discharge of a portion of solid particles and flue gas by means of suction from the cyclone (2) and for return thereof to the combustion chamber (14) of the reactor, with said return to the combustion chamber (14) being separate from the remaining portion of solid particles.

6. The apparatus according to claim 5, characterized in that a pneumatic ejector (10, 21) is used as the suction device.

7. The apparatus according to claim 5, characterized in that another cyclone separator (16) is connected in the return path between the suction chamber (9) and the ejector (21) connecting the suction chamber to the combustion chamber (14).

## Patentansprüche

1. Verfahren zur Abscheidung von Feststoffpartikeln aus Rauchgasen in einem zirkulierenden Wirbelschichtreaktor, bei welchem Verfahren die Rauchgase aus dem oberen Teil des Reaktors in einen Zyklonabscheider geleitet werden, von wo Feststoffpartikeln aus getragen und durch eine Austrittsöffnung und ein Rückführrohr in den unteren Teil des Reaktors rückgeführt werden, dadurch gekennzeichnet, daß ein Teil der Feststoffpartikeln zusammen mit Rauchgas aus dem Zyklonabscheider durch Saugen aus einer Saugkammer am Boden des Zyklonabscheiders getrennt vom übrigen Anteil der Feststoffteilchen ausgetragen und dem Reaktor getrennt rückgeführt wird.

2. Verfahren gemäß Anspruch 1, dadurch gekennzeichnet, daß die Saugwirkung durch einen in eine Ejektorpumpe eingegebenen Druckluftstrahl erreicht wird.

3. Verfahren gemäß Anspruch 1, dadurch gekennzeichnet, daß 1 bis 30%, vorzugsweise ca. 10% der Rauchgase aus dem Zyklonabscheider zusammen mit den Feststoffpartikeln ausgetragen werden, die durch Saugen abgezogen werden.

4. Verfahren gemäß Anspruch 1 oder 3, dadurch gekennzeichnet, daß Gas aus den Feststoffpartikeln abgeschieden wird, die durch Saugung aus dem Zyklonabscheider abgezogen sind, bevor die Feststoffpartikeln dem Reaktor rückgeführt sind.

5. Zirkulierender Wirbelschichtreaktor (1), bestehend aus einem Apparat zur Abscheidung von Feststoffpartikeln aus Rauchgasen, welcher Apparat einen Zyklonabscheider (2) aufweist, der über einen Eintrittskanal (4) mit dem oberen Teil des Reaktors verbunden ist, wobei der trichterförmige untere Teil (6) des Zyklonabscheiders zur Rückführung von abgeschiedenen Partikeln über ein Rückführrohr (8) mit dem Reaktor verbunden ist, dadurch gekennzeichnet, daß zwischen dem unteren Teil (6) des Zyklonabscheiders (2) und dem Rückführrohr (8) eine Saugkammer (9) angeordnet ist, die durch ein zweites Rückführrohr (11, 20) mit einer Saugvorrichtung (10, 21) und dem Reaktor verbunden ist, zur Austragung von einem Teil der Feststoffpartikeln und Rauchgas durch Saugen aus dem Zyklon (2) und zur Rückführung derselben in die Brennkammer (14) des Reaktors, wobei die genannte Rückführung in die Brennkammer (14) getrennt vom übrigbleibenden Anteil der Feststoffpartikeln erfolgt.

6. Apparat gemäß Anspruch 5, dadurch gekennzeichnet, daß als Saugvorrichtung ein pneumatischer Ejektor (10, 21) eingesetzt wird.

7. Apparat gemäß Anspruch 5, dadurch gekennzeichnet, daß ein anderer Zyklonabscheider (16) an die Rückführleitung zwischen Saugkammer (9) und Ejektor (21), die die Saugkammer mit der Brennkammer (14) verbindet, angeschlossen ist.

**Revendications**

1. Procédé de séparation de particules solides des gaz de fumée dans un réacteur à lit fluidisé circulant selon lequel les gaz de fumée provenant d'une partie supérieure du réacteur sont amenés à un séparateur cyclone à partir duquel les particules solides sont déchargées et ramenées à la partie inférieure du réacteur par l'intermédiaire d'une ouverture d'évacuation et d'une conduite de retour caractérisé en ce qu'une portion des particules solides, avec les gaz de fumée provenant du séparateur cyclone, est déchargée sous l'effet de l'aspiration à partir d'une chambre d'aspiration au fond du séparateur cyclone, séparément de la partie restante des particules solides et est ramenée séparément dans le réacteur.

2. Procédé selon la revendication 1, caractérisé en ce que l'aspiration est obtenue à l'aide d'un courant d'air comprimé délivré dans une pompe éjecteur.

3. Procédé selon la revendication 1, caractérisé en ce que 1 à 30%, de préférence environ 10% des gaz d'échappement sont déchargés du séparateur cyclone avec les particules solides déchargées à l'aide de l'aspiration.

4. Procédé selon la revendication 1 ou 3, caractérisé en ce que du gaz est séparé des particules solides déchargées par l'effet de l'aspiration à partir du séparateur cyclone avant que les particules solides soient ramenées au réacteur.

5. Réacteur à lit fluidisé circulant (1) comprenant un dispositif pour séparer les particules solides des gaz de fumée, ce dispositif comportant un séparateur cyclone (2), connecté à la partie supérieure du réacteur par l'intermédiaire d'une conduite d'admission (4), la partie inférieure en forme d'entonnoir (6) du séparateur cyclone étant connectée au réacteur par l'intermédiaire d'une conduite de retour (8) pour recycler des particules solides caractérisé en ce que l'on dispose, entre la partie inférieure (6), du séparateur cyclone (2) et la conduite de retour (8), une chambre d'aspiration (9), reliée, par l'intermédiaire d'une seconde conduite de retour (11, 20), à un dispositif d'aspiration (10, 21) et au réacteur pour décharger une portion des particules solides et des gaz de fumée sous l'effet de l'aspiration par le cyclone (2) et pour la ramener à la chambre de combustion (14) du réacteur, ledit retour vers la chambre de combustion (14) étant séparé de la partie restante des particules solides.

6. Dispositif selon la revendication 5, caractérisé en ce que l'on utilise un éjecteur pneumatique (10, 21) comme dispositif d'aspiration.

7. Dispositif selon la revendication 5, caractérisé en ce qu'un autre séparateur cyclone (16) est connecté dans la trajectoire de retour, entre la chambre d'aspiration (9) et l'éjecteur (21) reliant la chambre d'aspiration à la chambre de combustion (14).

FIG.1

FIG. 2